# FASCICULE DE BREVET EUROPEEN

(11) **EP 1 319 964 B1**
(45) Date de publication et mention de la délivrance du brevet: **31.08.2011**
(21) Numéro de dépôt: 02292863.4
(22) Date de dépôt: 19.11.2002
(51) Int. Cl.: G01V 1/38

(54) **Système d'acquisition de données sismiques utilisant des stations d'acquisition posées sur le fond marin**
Seismisches Datenerfassungssystem unter Verwendung von Datenerfassungsstationen auf dem Meeresgrund
Seismic data acquisition system using acquisition stations positioned on the sea ground

(30) Priorité: 10.12.2001 FR 0116005
(43) Date de publication de la demande: 18.06.2003
(73) Titulaire: Institut Français du Pétrole, 92852 Rueil-Malmaison Cedex (FR)
(72) Inventeur: Bary, Rénate, 92500 Rueil-Malmaison (FR)

(56) Documents cités:
- FR-A- 2 772 931
- US-A- 4 905 205
- US-A- 5 189 642
- US-A- 5 253 223
- US-A- 5 452 262
- BIBEE L D ET AL: "Seismic penetrator technology for use in shallow water seismoacoustics" OCEANS '93. ENGINEERING IN HARMONY WITH OCEAN. PROCEEDINGS VICTORIA, BC, CANADA 18-21 OCT. 1993, NEW YORK, NY, USA,IEEE, 18 octobre 1993 (1993-10-18), pages I450-I454, XP010117379 ISBN: 0-7803-1385-2

## Description

La présente invention concerne un système d'acquisition de données sismiques au moyen de stations d'acquisition posées sur le fond d'une masse d'eau.

L'activité dans le domaine de l'exploration sismique de zones souterraines immergées sous une épaisse couche d'eau profonde variant entre quelque 300 m et 1500 m (dite en offshore profond) est en plein essor. La taille moyenne des champs pétroliers que l'on va exploiter à l'avenir augmente considérablement avec la profondeur d'eau. Comme les coûts de mise en production, de la production elle-même ainsi que les risques associés sont d'autant plus élevés que la profondeur d'immersion augmente, il est d'autant plus important d'optimiser la production. Ceci nécessite de nouvelles technologies en exploration aussi bien qu'en production capables de réduire les incertitudes et de produire plus rapidement à des coûts acceptables.

Les méthodes sismiques sont en évolution constante. Cependant, malgré l'amélioration des résultats, leur coût est encore considéré comme étant trop élevé par les pétroliers, pour être appliquées systématiquement. La prospection sismique multi-composantes (3C/4C) et la sismique dite répétitive (4D) sont aujourd'hui clairement identifiées comme étant les technologies ayant le plus fort potentiel d'expansion et qu'elles vont se rapprocher au point qu'il sera possible de gérer les réservoirs souterrains en utilisant les informations supplémentaires disponibles et de les combiner avec les données issues de l'instrumentation dans le puits. Le défi consiste à mettre à la disposition du marché un système d'exploration sismique à détecteurs localisés au fond de la mer à un coût raisonnable, tout en tenant compte de la plus-value qu'apportent de tels systèmes en termes de richesse d'information et d'avantages logistiques. Le système d'exploration le plus approprié doit satisfaire aux exigences de la prospection sismique pour la caractérisation des réservoirs aussi bien que pour leur surveillance (monitoring) en cours d'exploitation, notamment en offshore profond, tout en étant fiable, performant et économique.

### Etat de la technique

On connaît des méthodes de prospection sismique de type dit OBC où l'on utilise un câble ou flûte sismique (streamer) posé sur le fond de la mer. Des récepteurs sismiques tels que des géophones montés sur cardans pour assurer une orientation correcte, ou des hydrophones sont disposés tout le long de cette partie et se trouvent couplés avec le fond. Les récepteurs sont reliés par des lignes intérieures à la flûte, à un équipement d'acquisition sur un bateau en surface. Plusieurs câbles peuvent être posés en parallèle formant un dispositif sismique 3D. De telles flûtes sont utilisées couramment jusqu'à des profondeurs de quelque 500 m et même dans certains cas jusqu'à des profondeurs de plus de 1000 m. Les flûtes sont remorquées en immersion dans le cadre d'opérations de prospection sismique ou bien installées à demeure de façon permanente dans le cadre d'une surveillance à long terme (sismique dite 4D). Un deuxième bateau est utilisé pour le déplacement de la source sismique. Cette technique est surtout utilisée dans des zones obstruées et dans des zones de transition. A moins d'enfouir les câbles dans les sédiments, le couplage des capteurs avec le fond de la mer n'est pas optimal et malgré un nombre important de capteurs, les données sismiques acquises sont de qualité moyenne.

Des dispositifs de ce type sont décrits par exemple dans les brevets US 4 870 625, WO 99/23510, 98/07050 ou 97/13167.

Il est connu également pour des recherches océanographiques notamment pour des études de la structure et de la sismicité de la marge continentale, de descendre jusqu'au fond de l'eau des stations d'acquisition (de type dit OBS) constituées chacune d'un boîtier étanche contenant des récepteurs sismiques, hydrophone et géophones, etc. ainsi que l'électronique associée, permettant d'enregistrer en continu le signal sismique de basse fréquence et de stocker les informations dans une mémoire de masse. Le couplage des capteurs dans la sédimentation est satisfaisant. La récupération des données acquises est réalisée après la remontée de l'équipement du fond à la surface. Un dispositif de largage activé par une commande acoustique du bateau en surface, permet la déconnexion d'un lest et puis la remontée de l'équipement d'acquisition à la surface et des dispositifs de signalisation tels qu'un drapeau et un voyant lumineux permettent sa localisation en mer. Après chaque utilisation, une station est re-conditionné avant nouvelle immersion. La majorité de ces stations opèrent à des profondeurs pouvant aller jusqu'à 6000 m.. Le nombre de stations déployées pour une mission scientifique est relativement faible et la distance entre les stations peut aller de quelques centaines de mètres à des centaines de kilomètres. La durée d'enregistrement, pouvant aller d'une semaine à plusieurs mois, est conditionnée par la capacité de stockage des données et de l'autonomie de la batterie d'alimentation.

Des systèmes de ce type sont décrits par exemple dans les brevets US 4,422,164, 4,692,906 ou 5,189,642.

Il est également connu d'implanter au fond de l'eau des unités d'acquisition de données sismiques de façon à améliorer le couplage des capteurs avec la formation sous-jacente.

L'implantation peut être effectuée en utilisant un robot sous-marin ou bien en larguant depuis la surface des unités d'acquisition suffisamment profilées pour s'implanter directement dans le fond par l'effet de la gravité. Ces unités d'acquisition de signaux sismiques comprennent une partie profilée ou flèche pourvue d'un logement pour au moins un récepteur sismique (un géophone 3C et un hydrophone par exemple) des inclinomètres pour mesurer leur orientation et un compas et un module de collecte de données sismiques reçues, et aussi des moyens de positionnement de chaque unité d'acquisition au fond (télémétrie acoustique) ainsi que des moyens de récupération en surface des données sismiques collectées. La récupération de ces unités en fin d'opération est également réalisée à l'aide du robot. Un système de ce type est donné pour travailler à des profondeurs d'eau jusqu'à 1500 m.

Des systèmes d'acquisition implantables sont décrits par exemple dans la demande de brevet français 00/16536, ou les brevets FR 2 738 642 et US 4,134,097.

Par le brevet FR 2 774 775 du demandeur, on connaît également une méthode de prospection ou surveillance sismique d'un gisement sous-marin dans laquelle on descend jusqu'au fond de l'eau une ou plusieurs unités d'émission sismique comprenant une ou plusieurs sources sismiques associées à des moyens d'alimentation en énergie, chacune des ces unités étant reliée à la surface par un ombilical multifonctions. Des récepteurs sismiques peuvent également être couplés avec la surface du fond.

Les dispositifs d'acquisition en immersion qu'ils soient mobiles ou couplés avec le fond de la masse d'eau, sont généralement associés à des moyens de positionnement acoustique. Par télémétrie acoustique, on repère la position relative des dispositifs par rapport à plusieurs bouées de surface qui sont pourvues de moyens de repérage par rapport à des satellites (système de positionnement GPS). Des systèmes de repérage combinant télémétrie acoustique et positionnement par satellite sont décrits par exemple dans les brevets US 5,119,341 et 5,579,285.

### Le système selon l'invention

Le système qui a pour but d'acquérir des données sismiques multi-composantes d'une formation souterraine immergée au moyen de stations d'acquisition en contact avec le fond de la masse d'eau soit en réponse à l'émission d'ondes sismiques dans l'eau par une source impulsionnelle ou vibratoire de surface ou de fond et en synchronisme avec elle (écoute active), soit en permanence à partir d'événements micro sismiques générés par des évolutions naturelles dans le sous-sol (écoute passive).

Il comporte une station centrale de commande et d'acquisition, plusieurs bouées relais adaptées à flotter à la surface de l'eau et comprenant chacune un module de contrôle, un récepteur de signaux de positionnement par satellite de type GPS par exemple, et des moyens de transmission radio pour échanger des données avec la station centrale de commande et d'enregistrement, une pluralité de stations d'acquisition sismique de fond comprenant chacune un corps étanche associé à une partie profilée ou flèche pourvue d'un logement pour des récepteurs sismiques, adaptées à descendre par l'effet de la gravité jusqu'au fond de la masse d'eau et à y pénétrer de façon à coupler les récepteurs sismiques avec la formation souterraine, chaque station d'acquisition comprenant un ensemble de commande et un dispositif d'acquisition de données sismiques reçues par les récepteurs sismiques dans la flèche.

Le système est caractérisé en ce que les bouées relais et les stations d'acquisition sismique de fond sont pourvues chacune d'un dispositif de transmission acoustique comprenant un transpondeur acoustique, un module de positionnement acoustique et un module de communication acoustique pour échanger avec elles, par modem via le transpondeur, soit des données de positionnement soit des données de commande issues de la station centrale ou des données sismiques acquises par le dispositif d'acquisition à transmettre à la dite station centrale.

Suivant un mode de mise en oeuvre, les stations d'acquisition sismique sont divisées en plusieurs groupes, chaque bouée relais étant adaptée à échanger des données de positionnement et des données de commande ou des données sismiques avec le groupe des stations d'acquisition de fond plus proches d'elle que des autres bouées relais.

Suivant un mode de réalisation, chaque station d'acquisition comporte par exemple des moyens de stockage de traces d'enregistrement sismique correspondant à des signaux sismiques captés par les récepteurs sismiques de chaque station d'acquisition et des moyens dans l'unité de commande pour commander le transfert différé suivant une fréquence de transmission particulière, à une bouée relais via son module de communication acoustique d'au moins une partie des dites traces sismiques stockées (soit les seules données de qualité garantes du bon fonctionnement des stations d'acquisition de fond, soit les traces sismiques toutes entières si la distance entre les stations d'acquisition et les bouées relais n'est pas trop grande.

Suivant un autre mode de réalisation, chaque station d'acquisition comporte des moyens de transmission optique des données sismiques enregistrées à une bouée relais ou un véhicule sous-marin passant au voisinage de chacune des stations d'acquisition.

Suivant un autre mode de réalisation, chaque station d'acquisition comporte des moyens de stockage de traces d'enregistrement sismique correspondant à des signaux sismiques captés par les récepteurs sismiques de chaque station d'acquisition et des moyens, dans l'unité de commande, pour former des données indicatives du bon fonctionnement de la dite station d'acquisition et commander le transfert suivant une fréquence de transmission particulière, des données formées à une bouée relais (RCB) via son module de communication acoustique.

Suivant un mode de mise en oeuvre, chaque bouée relais comporte des moyens coopérant avec le module de contrôle pour acquérir et dater les signaux acoustiques relatifs au positionnement de stations d'acquisition et les transmettre à la station centrale en même temps que ses propres coordonnées reçues par le récepteur du système de positionnement par satellite.

Suivant un autre mode de réalisation, chaque bouée relais comporte des moyens pour enregistrer les données sismiques acquises provenant des stations d'acquisition et à transmettre à la station centrale.

Suivant un mode de réalisation, chaque station d'acquisition comporte des moyens de flottaison associés au corps étanche et des moyens de largage pour dissocier le dit corps de la flèche correspondante, sur commande de la station centrale.

Suivant un autre mode de réalisation, chaque station d'acquisition comporte des moyens de couplage à un réseau de transmission industriel, permettant le transfert direct des données sismiques stockées à la station centrale.

Suivant un mode de réalisation, la station centrale comporte un ensemble de commande comprenant une unité centrale associée à des moyens de mémorisation, et des éléments d'interface gérant les échanges entre l'unité centrale, et des moyens de visualisation et d'impression, des moyens de mémorisation de masse, des moyens de communication avec les stations d'acquisition et des bouées relais, des ensembles de communication avec les bouées relais par radio et de réception de signaux de positionnement GPS, et un ensemble de contrôle et de déclenchement d'une source sismique.

Suivant un autre mode de réalisation, chaque station d'acquisition comporte des moyens de transmission optique des données sismiques enregistrées à une bouée relais ou un véhicule.

Suivant un autre mode de réalisation, chaque bouée relais comporte des moyens pour gérer la transmission du signal de déclenchement d'une source sismique dans le but de synchroniser au mieux l'acquisition des données sismiques par l'ensemble des stations de fond.

Suivant un autre mode de réalisation, le système comporte une station portable de contrôle et de test pour assurer la logistique de déploiement et de récupération des stations d'acquisition et de leurs données, comprenant des moyens de localisation des stations d'acquisition après leur remontée en surface par l'intermédiaire d'une liaison hertzienne, des moyens de téléchargement de données stockées dans des stations d'acquisition et leur enregistrement, des moyens de récupération à distance de données sismiques stockées dans des bouées relais, et des moyens de transfert des données sismiques vers la station centrale de contrôle et d'enregistrement par l'intermédiaire d'un réseau de communication.

La méthode d'exploration ou de surveillance sismique d'une formation souterraine immergée, selon l'invention comporte :
- l'implantation au fond de la masse d'eau d'un ensemble d'unités d'acquisition de signaux sismiques comprenant une partie profilée ou flèche pourvue d'un logement pour au moins un récepteur sismique et un module d'acquisition de données sismiques reçues par chaque récepteur, chaque unité d'acquisition étant adaptée à descendre par l'effet de la gravité jusqu'au fond de la masse d'eau et à y pénétrer de façon à coupler les récepteurs sismiques avec la formation souterraine ;
- la détermination de la position de chaque unité d'acquisition implantée au fond ;
- la réalisation d'opérations sismiques avec émission d'ondes par une source sismique immergée, réception des ondes renvoyées par des discontinuités de la formation souterraine en réponse aux ondes émises dans la formation, collecte des données reçues par les récepteurs de chaque unité d'acquisition ; et
- la récupération par une station centrale des données sismiques acquises par chaque unité d'acquisition.

Elle est caractérisée en ce qu'elle comporte l'échange entre les bouées relais et les stations d'acquisition sismique de fond soit de données de positionnement, soit de données de commande issues de la station centrale ou des données sismiques acquises par les dispositifs d'acquisition de fond à transmettre à la dite station centrale par le biais d'ensembles dans chacun des dits dispositifs d'acquisition de fond et chacune des bouées relais comprenant un transpondeur acoustique, un module de positionnement acoustique et un module de communication acoustique par modem.

Suivant un mode de mise en oeuvre, la méthode comporte le positionnement et la synchronisation initiale en temps de chaque station d'acquisition sismique de fond au moment de son mouillage, par référence à un système de positionnement par satellite de type GPS par exemple, et le suivi de sa descente jusqu'au fond par combinaison de données de synchronisation en temps et de mesures de temps obtenues par télémétrie acoustique entre la station d'acquisition et les différentes bouées relais, jusqu'à stabilisation de la dite station au contact avec le fond.

Suivant un mode de mise en oeuvre, la méthode comporte la transmission acoustique de traces d'enregistrement sismique captées par les récepteurs sismiques de chaque station d'acquisition à la bouée relais correspondante par le biais des dits ensembles correspondants.

Suivant un mode de mise en oeuvre, la méthode comporte la transmission acoustique de chaque station d'acquisition à la bouée relais correspondante par le biais des dits ensembles correspondants, de données de qualité indicatives du bon fonctionnement de chaque station d'acquisition.

### Présentation sommaire des figures

Les caractéristiques et avantages de la méthode et du système selon l'invention, apparaîtront mieux à la lecture de la description ci-après d'exemples non limitatifs de réalisation, en se référant aux dessins annexés où :
- la Fig.1 montre schématiquement la répartition spatiale des différents éléments du système d'acquisition mis en place au-dessus d'une formation à investiguer ;
- la Fig.2 montre schématiquement la structure de chaque station d'acquisition de fond DSAU;
- la Fig.3 représente schématiquement le diagramme fonctionnel de chaque station d'acquisition de fond ;
- la Fig.4 montre schématiquement le synoptique de la chaîne d'acquisition des signaux captés par les récepteurs sismiques de chaque station d'acquisition de fond DSAU ;
- la Fig.5 représente schématiquement le diagramme fonctionnel de chaque bouée relais RCB en surface ;
- la Fig.6 représente schématiquement le diagramme fonctionnel de la station centrale CCRU;
- la Fig.7 est un schéma synoptique de la station centrale, illustrant ses principales fonctionnalités ; et
- la Fig.8 est un schéma synoptique d'une station centrale auxiliaire PTCU à qui l'on peut déléguer par exemple la logistique de déploiement et de récupération des équipements d'acquisition ainsi que leur maintenance.

### DESCRIPTION DETAILLEE

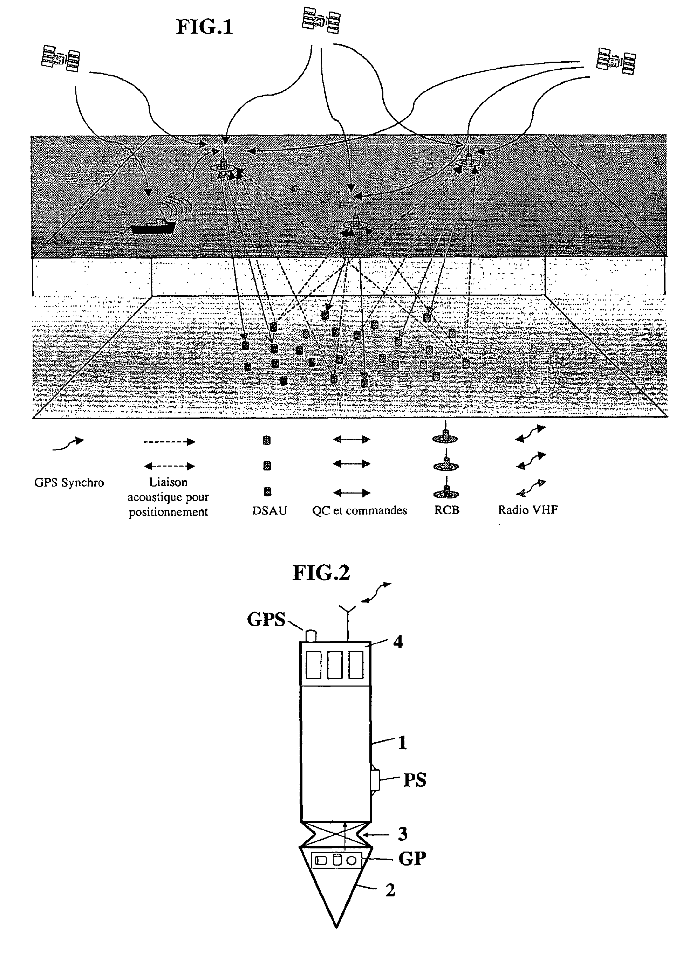

Le système est modulaire et comporte (Fig.1) les éléments suivants :
- un certain nombre de stations d'acquisition DSAU récupérables posés sur le fond de la mer permettant l'acquisition des données sismiques ;
- plusieurs bouées relais de contrôle RCB positionnées en surface ;
- des liaisons hertziennes pour l'échange d'informations, commandes et données, entre les bouées relais de contrôle RCB et l'équipement de contrôle à bord du bateau;
- des liaisons acoustiques bidirectionnelles fond surface pour le positionnement, les commandes et la transmission de données permettant au moins d'effectuer un contrôle (QC) de bon fonctionnement des équipements de fond ;
- des liaisons de type GPS pour le positionnement des bouées relais RCB et des stations d'acquisition DSAU après leur récupération à la surface ;
- des liaisons hertziennes activées par les stations d'acquisition DSAU après leur remontée à la surface pour permettre la transmission des coordonnées de positionnement vers le bateau de récupération.
- Le système comporte un équipement de contrôle à bord du navire constitué :
   - d'un ensemble portable de test et de contrôle de l'équipement dans l'eau PTCU à qui l'on délègue de préférence une partie des fonctionnalités de la station centrale CCRU pour plus de souplesse dans la conduite des opérations ;
   - d'une station d'enregistrement et de contrôle centralisée CCRU à bord du bateau comprenant un dispositif de contrôle du positionnement et de localisation des modules d'acquisition pour la récupération ; et
   - d'une station DGPS d'un type connu servant de référence, adaptée à transmettre les paramètres de correction différentielle de position aux bouées relais RCB, ce qui permet d'améliorer la précision avec laquelle chacune d'elles détermine sa position.

### I- Station d'acquisition de fond DSAU

Chaque station d'acquisition DSAU comporte (Fig.2) un boîtier cylindrique pressurisé 1 adapté à contenir les différents modules électroniques constitutifs. Une flèche conique 2 est fixée avec la base du boîtier cylindrique 1 par l'intermédiaire d'un dispositif d'accrochage amovible 3. Elle favorise la descente de la station sous l'effet de la gravité vers le fond de la mer, sensiblement à la verticale du lieu de largage et un couplage au sol avec le fond suffisant compte tenu des courants possibles. La flèche 2 est découplée mécaniquement du cylindre 1 et comporte des logements pour différents capteurs sismiques S (au moins un ensemble comprenant un géophone trois composantes ou « triphone » associé à un hydrophone). Un dispositif de flottaison 4 comprenant des bouées, un réservoir de gaz et un élément de contrôle, est fixé au-dessus du boîtier cylindrique 1 dans le but de ramener la station à la surface quand le boîtier cylindrique est décroché de la flèche 2.

De préférence, chaque station comporte un mécanisme (non représenté) de propulsion dans les sédiments du fond de la mer au moment de l'impact pour assurer le couplage parfait des capteurs. Le mécanisme de propulsion peut être déclenché soit par la détection du contact au sol du DSAU, soit à partir d'une commande reçue par la bouée de relais et de contrôle RCB à partir du moment où le système de positionnement a détecté la mise en place du DSAU au fond de l'eau.

Suivant une variante de réalisation, chaque station de fond peut également comporter plusieurs cylindres (deux ou trois par exemple), fixés à un axe central supportant la flèche conique.

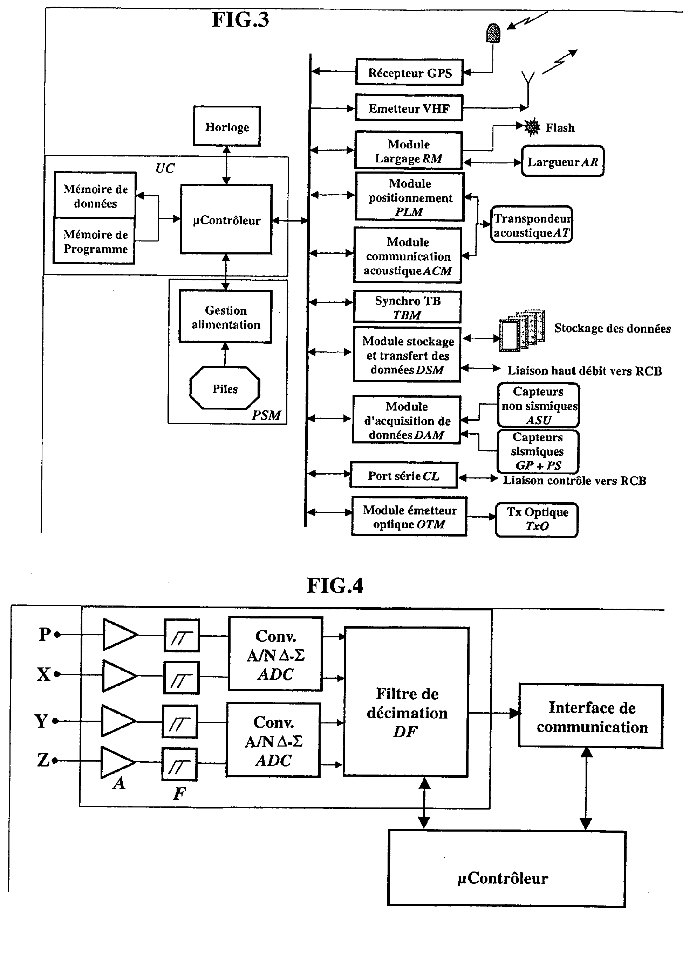

Chaque station d'acquisition de base DSAU est adaptée à l'acquisition des signaux reçus par les capteurs sismiques: géophone 3C dans la flèche 2 et l'hydrophone, et elle est pourvue d'un certain nombre (jusqu'à dix) entrées pour des capteurs ou dispositifs auxiliaires. Elle comporte (Fig.3) :
⇒ une unité de commande UC dédiée à la gestion de la station comportant un microcontrôleur et des mémoires de données et de programme ;
⇒ une horloge d'une très grande précision nécessaire à la datation des divers événements ;
⇒ un récepteur GPS et un émetteur radio VHF qui ne sont activés que lorsque le DSAU se trouve à la surface de l'eau ;
⇒ un module de largage RM permettant le déclenchement du largueur AR du DSAU pour la remontée à la surface de la station d'acquisition DSAU et sa récupération ;
⇒ un module de positionnement et de localisation PLM comportant un transpondeur acoustique AT pour déterminer le positionnement du module à partir de la surface ;
⇒ un module de communication acoustique ACM utilisant également un transpondeur acoustique AT permettant les échanges nécessaires à la transmission des données de bon fonctionnement (QC) de l'équipement de fond, au démarrage des cycles d'enregistrement et pour déclencher le dispositif d'accrochage afin de libérer le boîtier ;
⇒ un dispositif de traitement du signal TBM de synchronisation des acquisitions des données sur le déclenchement des tirs sismiques ;
⇒ un module de stockage des données DSM connecté à ensemble de stockage de données (micro disque ou disque Flash) et comportant une liaison à haut débit permettant le téléchargement des données sismiques après la récupération des stations d'acquisition DSAU en surface, à bord du bateau ;
⇒ un module d'acquisition de données DAM comprenant une partie analogique d'acquisition et de conversion des données (préamplificateurs, convertisseurs analogique numérique, filtrages) sismiques et une partie d'interfaçage avec les capteurs non sismiques ;
⇒ un ensemble de capteurs non sismiques ASU comprenant entre autres un capteur de pression, d'humidité, de contact, etc. ;
⇒ un module de récepteurs sismiques GP comprenant au moins un géophone 3-composantes associé à un dispositif de couplage au fond de la mer et un hydrophone PS qui est localisé dans la partie supérieure du boîtier ;
⇒ une liaison à débit moyen avec l'extérieur du boîtier permettant l'initialisation et le contrôle du DSAU avant déploiement et après récupération ; et
⇒ un module de gestion de l'alimentation électrique PSM.

### I-1 Unité de commande UC de la station d'acquisition DSAU

L'unité de commande UC comporte un microprocesseur du type DSP (Digital Signal Processor) à faible consommation. Des circuits à logique programmable sont utilisés pour gérer les ressources d'entrées-sorties, les interruptions et les interfaces spécifiques pour les capteurs ou dispositifs non sismiques tels que le module de communication acoustique ACM, le module de largage RM, le module de positionnement PLM, le récepteur GPS et l'émetteur / récepteur radio VHF dans le module de largage RM, le module de stockage des données DSM et les liaisons filaires de haut et moyen débit pour l'échange d'informations sismiques ou de contrôle vers l'extérieur du boîtier. Le programme de l'application du DSAU réside dans une mémoire re-programmable et les données dynamiques, paramètres ou données sismiques, sont contenues dans une mémoire vive d'une capacité adaptée.

### 1-2 Horloge interne

Un oscillateur, du type OCXO (pour « oven compensated crystal oscillator ») par exemple, avec une précision de 2x10⁻⁹ (1 ms / 5 jours) sera nécessaire pour assurer la datation précise des évènements soit liés au positionnement, soit à l'acquisition sismique. Pour des durées d'utilisation plus longues (au-delà de 5 jours), il faudra certainement prévoir un moyen de re-calibrage. La synchronisation de l'horloge ainsi que la date et l'heure seront effectuées avant la mise à l'eau du DSAU par l'intermédiaire du signal PPS (Pulse per second) d'un récepteur GPS interne ou externe. La précision de la date et l'heure devra être supérieure à 1 µs.

### I-3 Liaisons de service

Pour communiquer avec le DSAU à bord du navire sans avoir à ouvrir le boîtier on utilise les deux liaisons filaires suivantes :
a) une liaison GPS externe avec un port série de type RS-232 ou RS-422, dont la vitesse de transfert s'auto-configure en fonction du dispositif connecté. Cette liaison sert à la configuration et la maintenance du DSAU et, éventuellement, à la synchronisation de l'horloge interne du DSAU par un récepteur.
b) Une liaison à haut débit pour la récupération des données enregistrées.

### I-4 Le module d'acquisition de données DAM

Le module d'acquisition de données DAM est en charge du module de récepteurs sismiques SRU comprenant le géophone 3C, du module d'hydrophone PS et du module des capteurs non sismiques ASU détectant la tension de l'alimentation électrique, la pression pour le positionnement, l'humidité dans le boîtier, le contact au sol du DSAU, l'inclinomètre et le compas.

Le module DAM est en charge :
- de la numérisation des signaux analogiques des capteurs sismiques,
- de l'acquisition et du contrôle des capteurs non sismiques,
- d'un testeur de couplage permettant de vérifier l'état de couplage des géophones, et
- d'un générateur de test permettant de contrôler la qualité des canaux sismiques.

Les circuits de numérisation des signaux sismiques reçus par le géophone à trois composantes X, Y, Z et l'hydrophone P comportent pour chaque voie (Fig.4) un amplificateur A et un filtre F et un convertisseur analogique numérique ADC de type Delta-Sigma avec filtre de décimation DF, tous à faible consommation. La conversion se fait sur 24 bits avec une fréquence d'horloge de 2048 MHz. La période d'échantillonnage sera de 0,5 - 1 - 2 ou 4 ms entre 3 Hz et 824 - 412 - 206 - 103 Hz respectivement. La dynamique du signal est par exemple de 120 dB.

Les circuits de numérisation pour les capteurs non sismiques, sont fonctionnellement identiques mais la période d'échantillonnage est beaucoup plus grande (1 s par exemple) et adaptée en fonction des spécifications des dispositifs spécifiques utilisés.

### I-5 Module de géophones GP

Le module de géophones GP comporte en standard un géophone 3-composantes et, optionnellement, un inclinomètre X-Y et un compas magnétique. La base du module est profilée pour permettre un couplage optimal adapté aux ondes S. Ce module est situé dans la flèche de la station d'acquisition de fond DSAU qui est enfoncée dans les sédiments du fond de la mer pour assurer le couplage parfait des capteurs.

### I-6 Module de stockage des données DSM

Les données sismiques acquises sont stockées sur un support non volatil, constitué d'un ou plusieurs disques basés sur la technologie des mémoires *flash* ou bien des microdisques. La capacité de stockage minimale est par exemple de 1 Gigaoctet extensible jusqu'à 4 Go. Une capacité de l'ordre de 1 Gigaoctet est suffisante de stocker quelque 26 000 tirs de 10 s de durée à une période d'échantillonnage de 2 ms avec un taux de compression de 1:2. Pour un objectif à 3000 m de profondeur, la surface de tir à couvrir est de l'ordre de 36 km² ce qui correspond à 28 800 tirs à raison d'un point de tir tous les 25 m et d'un espace entre lignes de 50 m.

### I-7 Récepteur GPS

Le récepteur GPS remplit deux fonctions :
- la synchronisation de l'horloge interne du DSAU avant le déploiement du dispositif ; et
- l'acquisition des coordonnées de positionnement après la remontée de la station DSAU à la surface de l'eau pour faciliter la localisation des ensembles d'acquisition au moment de la récupération des données de fond.
- Le récepteur GPS est désactivé pendant toute la durée de l'immersion complète de la station d'acquisition DSAU.

### I-8 Module de positionnement et de localisation PLM

### a) Principe du positionnement et de localisation

Le principe de positionnement du réseau des bouées positionnées à la surface de l'eau (au minimum 2) est de mesurer le temps de trajet d'un signal émis par une source acoustique, par exemple le transpondeur d'un véhicule sous-marin AUV ou bien depuis une station de fond DSAU. La source acoustique émet périodiquement deux signaux successifs : le premier synchrone au temps GPS et le deuxième décalé en fonction de la profondeur. Ces signaux sont reçus par toutes les bouées qui datent très précisément l'arrivée de ces deux signaux avec le temps GPS correspondant. La bouée transmet ensuite par une liaison hertzienne au système de contrôle sa propre position DGPS associée aux temps d'arrivée reçus par le DSAU. Connaissant la vitesse de propagation du son dans l'eau, le temps de propagation est directement converti en distance transpondeur/bouée. Comme la profondeur est mesurée précisément par chaque bouée, la position de la source acoustique est obtenue par l'intersection de cercles ayant un radian équivalent à la portée oblique dans le plan horizontal.

La précision du positionnement est de l'ordre du mètre ou moins, selon la profondeur du dispositif.

Le système de positionnement est activé dès la mise à l'eau de chaque station DSAU permettant ainsi le suivi de sa trajectoire dans l'eau pendant toute la descente. La mise en place du DSAU peut être considérée comme terminée dès que sa position reste stable. Le système de positionnement peut alors être désactivé jusqu'au moment de la récupération ou bien pour permettre de vérifier sa position ponctuellement pendant les opérations.

### b) Transpondeur acoustique AT

Les caractéristiques nécessaires du transpondeur acoustique utilisé par la transmission de données télémétriques sont :
- Fréquence: 34 kHz,
- Période de répétition: 1 à 2 s,
- Stabilité de l'horloge: 10⁻⁸/mois,
- Capteur de pression: 0-30 MPa, 1%.

La synchronisation de l'horloge doit être faite à l'aide du signal de sortie dit PPS (pour « Pulse Per Second ») du récepteur GPS avant la mise à l'eau de la station de fond DSAU.

Pour optimiser l'équipement de la station de fond DSAU, il est préférable que ce transpondeur acoustique soit également utilisé par le module de communication acoustique.

### I-9 Module de communication acoustique ACM

La liaison acoustique bidirectionnelle par modem sera utilisée pour transmettre les commandes liées aux opérations du central de contrôle et d'enregistrement CCRU sur le bateau aux DSAU par l'intermédiaire des bouées RCB positionnées en surface et recevoir les données du contrôle qualité QC qui en proviennent. Cette liaison sera également utilisée pour la synchronisation précise des tirs sismiques. Un débit de 1200 bits/s par exemple permettrait de transmettre 150 octets/s ce qui serait suffisant pour effectuer un contrôle quasi continu pendant les opérations sismiques. A chaque bouée RCB est associée de préférence une fréquence acoustique propre pour communiquer avec les ensembles d'acquisition DSAU du dispositif qui lui seront affectés. Ceci a également pour but d'optimiser la portée acoustique.

Les commandes permettront de gérer les différentes fonctionnalités du DSAU telles que la gestion de l'alimentation électrique, l'activation ou désactivation de fonctions, leur configuration, le paramétrage pour l'acquisition sismique, le contrôle des opérations sismiques et de l'enregistrement des données, etc.

Les données de qualité QC transmises depuis chaque station DSAU permettront d'obtenir un diagnostic du fonctionnement: qualité du signal sismique, contrôle du niveau de l'alimentation électrique, suivi de la capacité de l'enregistrement des données, le contrôle de l'électronique, etc.

La transmission de l'intégralité des données sismiques acquises est plus difficilement envisageable. Pour un tir sismique de 10 s à 2 ms et un facteur de compression de 2, par exemple, la récupération de 4 traces d'une station DSAU durerait 3min 20s si l'on considère un débit de transfert moyen de 1200 bits/s. Pour un débit faible de 20 bits/s, cela durerait 3h 20s et pour un débit élevé de 4800 bits/s 50 s. Pour les données d'un tir complet, ce temps est à multiplier par le nombre de DSAU du dispositif divisé par le nombre de bouées de relais RCB, dans le cas où les bouées RCB sont capables de recevoir des données en simultanéité.

### I-10 Module de largage RM

Le système de largage sera déclenché à partir d'une commande issue soit du central de contrôle d'enregistrement CCRU, soit du système de test portable PTCU. Ceci assure le déclenchement du mécanisme de largage provoquant la remontée à la surface du conteneur et l'activation des dispositifs de localisation pour le ramassage. Le module géophone GP pourra éventuellement être déconnecté du DSAU et abandonné au fond de la mer, si l'ensemble de flottaison n'est pas suffisant pour dégager la flèche du fond. A la réception de la commande de largage, la station DSAU activera le système de positionnement et programmera compte tenu de la durée de remontée la temporisation de l'activation du récepteur GPS, de l'émetteur radio et du flash de localisation visuelle de la station DSAU.

### I-11 Emetteur hertzien

L'émetteur radio permettra de transmettre les coordonnées GPS aux bouées relais RCB ou directement vers le navire de ramassage. L'émetteur ne sera activé effectivement qu'après la remontée du DSAU à la surface de l'eau. La fréquence radio utilisée sera identique à celle utilisée pour la liaison bouées relais RCB et central de contrôle et d'enregistrement CCRU.

### I 12 Module de synchro TB

Le rôle du module de synchro TB consiste à déterminer avec précision (≤100 µs) l'instant du déclenchement de la source et de synchroniser les données acquises sur ce temps. En règle générale, les acquisitions sismiques sont démarrées en synchronisation avec le déclenchement de la source sismique. Ceci nécessite la transmission d'un signal de synchronisation, le TB (Time Break) dans le cas des opérations sismiques, depuis la source en passant le central de contrôle et d'enregistrement CCRU, les bouées RCB jusqu'aux stations d'acquisitions DSAU. Compte tenu des délais introduits liés essentiellement à la transmission de ce signal dans des différents milieux, air et eau, il est nécessaire de recourir à des artifices pour appliquer des corrections qui tiennent compte des différents temps de trajet. L'ensemble des éléments du système est synchronisé très précisément sur l'heure obtenue par le récepteur GPS. Le central de contrôle et d'enregistrement CCRU associe l'heure à l'instant précis du déclenchement d'un tir sismique. Cette information est transmise aux stations de fond DSAU immédiatement après le signal de synchronisation des acquisitions ce qui leur permet de re-synchroniser les échantillons sismiques acquis en appliquant la méthode décrite dans le brevet FR 2.787.201 (US 6 253 156) du demandeur.

### I-13 Module d'alimentation PSM

Le module d'alimentation électrique est conçu de sorte qu'il puisse être remplacé facilement et que l'on puisse d'adapter la capacité d'alimentation aux besoins de l'opération sismique. Pour des opérations de courtes durées, on pourra probablement utiliser des piles alcalines, alors que pour des durées plus importantes il faudra recourir à des piles au lithium plus onéreuses. L'autonomie de l'alimentation devra être au minimum de 7 jours d'opérations en quasi-continue. En option, la capacité d'autonomie devra être extensible à 1 mois ou plus.

### II Bouée relais RCB

Chaque bouée de relais et de contrôle RCB est positionnée à la surface de l'eau au-dessus du dispositif sismique de fond. Un minimum de deux bouées RCB est nécessaire. On répartit les stations de fond en autant de groupes qu'il y a de bouées relais et on attribue à chaque bouée relais la gestion des échanges avec les stations de fond qui lui sont les plus proches. Leur rôle consiste à :
- servir de relais pour les données échangées avec la station centrale de contrôle et d'enregistrement CCRU à bord du bateau, par une liaison hertzienne, et avec les stations d'acquisition DSAU, par liaison acoustique ;
- acquérir et dater les signaux acoustiques relatifs au positionnement des stations DSAU et à les transmettre à la station centrale CCRU en même temps que ses propres coordonnées GPS reçues par le récepteur GPS ;
- enregistrer les données sismiques provenant des stations DSAU sur une mémoire de masse (disque) dans le cas où le déroulement des opérations sismiques le permet et à condition que le débit de la liaison acoustique soit suffisant.

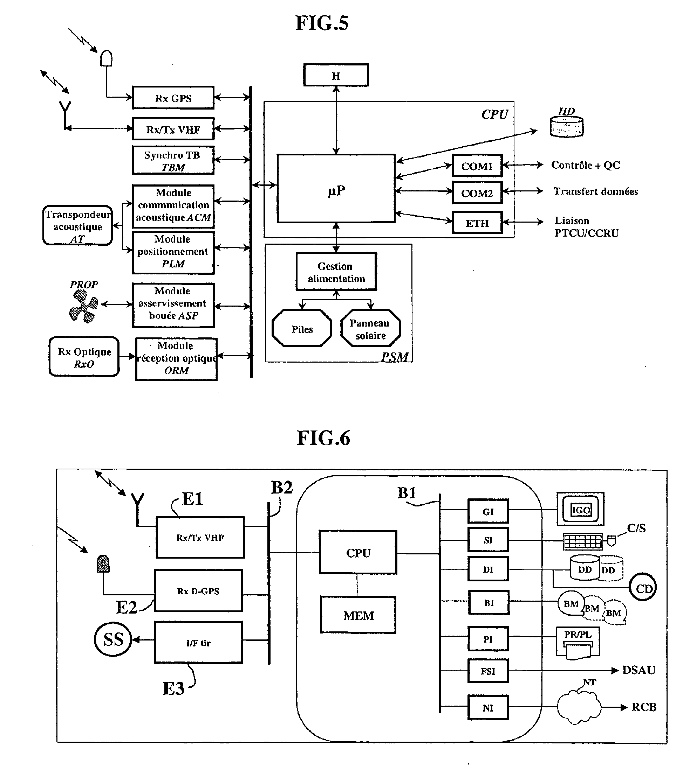

L'équipement électronique de chaque bouée de relais et de contrôle comporte (Fig.5) :
- Une carte CPU à microprocesseur (type PC) pour la gestion de la bouée ;
- Un disque grande capacité HD ;
- Une interface réseau de type Ethernet ETH par exemple ;
- Au moins une liaison par câble (COM1, COM2) pour communiquer avec la station DSAU sur le pont du bateau;
- Une horloge précise H ;
- Un récepteur Rx GPS ;
- Un ensemble émetteur et récepteur radioRx/Yx en VHF par exemple;
- Un module acoustique pour le positionnement PLM ;
- Un transpondeur ou hydrophone AT utilisé pour le positionnement et la transmission des données;
- Un modem acoustique pour la transmission des données ACM ;
- Une interface de synchronisation des tirs sismiques TBM ;
- Un module de gestion de l'alimentation électrique PSM fourni par des piles et un panneau solaire pour accroître l'autonomie ;
- Un module d'asservissement du positionnement ASP couplé au dispositif de propulsion PROP de la bouée RCB ;
- Un dispositif d'ancrage en cas d'utilisation dans des eaux peu profondes.

### II-1 Carte à microprocesseur

La carte à microprocesseur est par exemple une carte PC de type industriel à faible consommation adaptée à gérer le disque et le transfert ultérieur des données sismiques qui y sont mémorisées vers la station centrale de contrôle et d'enregistrement CCRU par un réseau de communication à haut débit.

### II-2 Liaison hertzienne

La liaison radio entre la station centrale de contrôle et d'enregistrement CCRU et les stations de fond RCB via les bouées relais RCB est par exemple une voie de transmission radio dans la bande de 216-220 MHz ou 450-470 MHz par exemple. Un débit de quelque 10 kbits/s convient. Cette liaison est utilisée :
- par le module de positionnement acoustique pour la réception des ordres de la station centrale CCRU vers les stations de fond DSAU et la réception des informations de positionnement qui en proviennent ;
- pour l'échange des informations lors des acquisitions sismiques : commandes reçues par le central de contrôle et d'enregistrement CCRU à destination des stations de fond DSAU et émission des données de contrôle de qualité QC ou données sismiques qui en proviennent.

Chaque bouée RCB est identifiée par une adresse propre et possède une fréquence d'émission radio propre. La fréquence de réception est identique pour l'ensemble des bouées.

### II-2 Liaison par modem acoustique

Il s'agit d'une liaison acoustique bidirectionnelle par modem. Chaque bouée RCB a sa propre fréquence acoustique pour communiquer avec les stations de fond DSAU du système qui lui sont affectés. Ceci a également pour but d'optimiser la portée acoustique. Le débit de la liaison peut être choisi entre 20 et 4800 bits/s selon les conditions de transmission. Un débit moyen de 1200 bits/s convient généralement.

### II-3 Module acoustique de positionnement

Ce module communique avec un transpondeur acoustique, une horloge très précise et stable (10⁻⁸ par mois), le récepteur GPS et l'émetteur-récepteur radio. L'horloge est synchronisée sur le signal 1 PPS ( Pulse per Second) du récepteur GPS avant la mise en place de la bouée relais. La période de répétition du signal est de 1 ou 2 s par exemple.

### II-4 Interface de synchronisation des tirs sismiques

Cette interface est adaptée à gérer la transmission du signal de déclenchement de la source sismique dans le but de synchroniser au mieux les acquisitions au niveau de l'ensemble des stations de fond DSAU.

### II-5 Alimentation de la bouée relais

La capacité d'alimentation de chaque bouée relais est modulable compte tenu de ses fonctionnalités et de la durée des opérations. Les piles sont conditionnées dans un boîtier indépendant de l'électronique pour faciliter leur remplacement pendant les opérations, si nécessaire.

L'adjonction d'un panneau solaire permet d'augmenter l'autonomie des batteries.

### II-6 Dispositif de propulsion contrôlable

Des courants marins plus ou moins importants risquent de faire dériver la bouée après sa mise en place. La transmission cyclique des coordonnées GPS vers le système centrale de contrôle et d'enregistrement CCRU permet de surveiller la dérive à chaque instant. Un dispositif de propulsion omnidirectionnel asservi permet de maintenir la bouée en place. Le principe connu des bouées autopropulsées est adapté à la bouée relais RCB. La vitesse de déplacement de ce type de bouées peut atteindre 3 noeuds et leur autonomie, entre un et sept jours, dépend essentiellement du type d'énergie utilisé.

Dans le cas où le système est utilisé dans des eaux peu ou moyennement profondes, un système d'ancrage de la bouée au fond de l'eau est préférable, car moins coûteux.

### II-7 Transmission optique

Lorsque les stations d'acquisition de fond sont à une distance relativement faible d'un ensemble de transmission de données: les bouées relais ou éventuellement d'un véhicule sous-marin passant à proximité équipé d'un ensemble de collecte, on peut également utiliser une voie de transmission optique pour transférer à cet ensemble de collecte les traces sismiques collectées. Comme ensemble de collecte, on peut dans un tel cas, utiliser l'électronique de communication d'une bouée relais auquel on associe un module de communication optique ORM et un récepteur optique RxOPT (Fig.5). On utilise les moyens acoustiques du module électronique pour transmettre les ordres de transfert de données aux stations d'acquisition de fond et celles-ci utilisent les moyens optiques pour transmettre en retour les données à l'ensemble de collecte.

### III Station centrale de contrôle et d'enregistrement CCRU

Comme illustré sur le schéma fonctionnel de la Fig.6, la station centrale de contrôle et d'enregistrement CCRU qui peut être par exemple à bord d'un navire, comporte tout d'abord un ensemble de commande UC comprenant une unité centrale CPU associée à des mémoires MEM. Cette unité centrale communique par un premier bus B1 avec les interfaces suivantes :
- une interface graphique GI gérant les échanges avec un écran de visualisation IGO ;
- une interface série SI gérant les échanges avec un clavier et une souris ;
- une interface DI gérant les échanges avec des disques de mémorisation et des disques optiques ;
- une interface BI pour gérer les échanges avec des dérouleurs de bande magnétique ;
- une interface parallèle PI gérant les échanges avec des imprimantes ;
- une interface série rapide FSI gérant les échanges avec les stations de fond DSAU avant leur immersion ou après leur récupération en surface ; et
- une interface NI gérant les échanges par un réseau local de communication (de type Ethernet par exemple), avec les bouées de surface RCB.
- Par un deuxième bus B2, l'unité centrale CPU communique avec :
   - un ensemble E1 d'émission réception d'ondes radio VHF ;
   - un ensemble E2 de réception des signaux de positionnement GPS ; et
   - un ensemble E3 de contrôle et de déclenchement d'une source sismique SS.

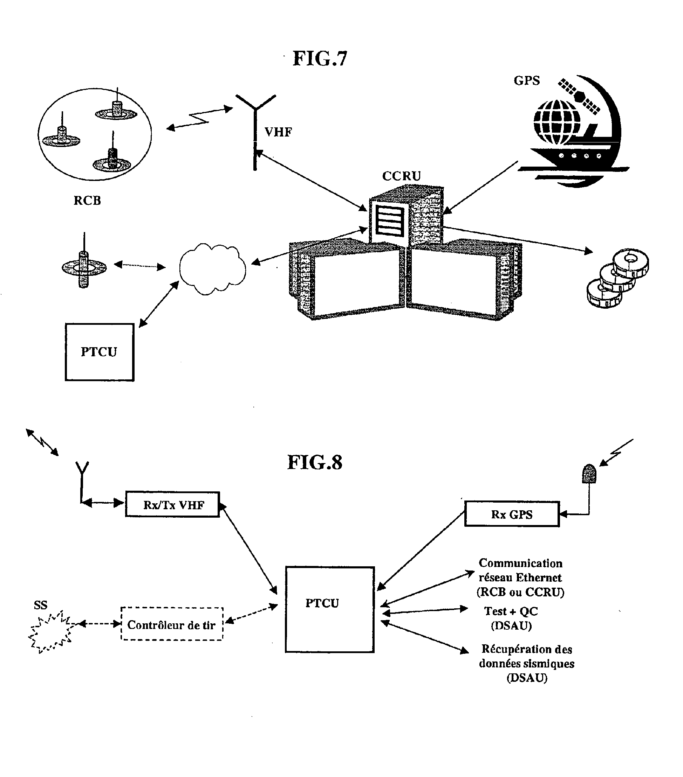

Comme illustré également par le schéma synoptique de la Fig.7, la station centrale assure les fonctions suivantes :
- Gestion de l'interface de contrôle graphique pour l'opérateur ;
- Gestion de la liaison radio VHF pour le contrôle et la surveillance des équipements d'acquisition dans l'eau, bouées de relais RCB et stations DSAU ;
- Traitement et visualisation graphiques des informations de positionnement pendant les phases de déploiement et de récupération des équipements d'acquisition ;
- Création et maintenance d'une base de données comprenant les informations de positionnement et de l'état fonctionnel de l'ensemble des équipements dans l'eau ;
- Gestion de l'interface avec le système de navigation GPS du bateau et du dispositif de contrôle de la source sismique ;
- Contrôle et surveillance des opérations sismiques, visualisation des événements d'erreurs et affichage des informations contenues dans les données de contrôle de qualité QC ;

Récupération des données sismiques acquises :
- soit par l'intermédiaire de la liaison hertzienne, si les débits de transfert des données sont suffisants, pendant les temps morts des acquisitions sismiques ;
- soit à partir des bouées RCB ou du central de test portable PTCU par l'intermédiaire du réseau de communication après la récupération des équipements : bouées relais RCB et stations d'acquisition de fond DSAU ; et

Enregistrement de toutes les données sismiques dans un format normalisé (SEG-D par exemple) sur supports magnétiques.

### IV Station portable de contrôle et de test PTCU

Pour plus de souplesse dans la conduite des opérations, une partie des fonctionnalités de la station centrale CCRU peut être déléguée à une station centrale auxiliaire de contrôle et de test PTCU à qui l'on assigne la logistique de déploiement et de récupération des équipements d'acquisition ainsi que leur maintenance. La station portable PTCU sera architecturé autour d'un PC portable puissant (« durci »). Ses fonctionnalités sont par exemple :
- L'interfaçage de contrôle graphique pour l'opérateur ;
- L'initialisation des paramètres de configuration des équipements d'acquisition DSAU et RCB;
- La réalisation des tests de contrôle de qualité QC et du bon état de fonctionnement de chaque station DSAU ;
- La gestion de l'émetteur-récepteur radio VHF pour le contrôle et la surveillance du positionnement des équipements d'acquisition dans l'eau, bouées de relais RCB et stations DSAU ;
- Le traitement et visualisation graphiques des informations de positionnement pendant les phases de déploiement et de récupération des équipements d'acquisition ;
- La création et la maintenance d'une base de données comprenant les informations de positionnement et de l'état fonctionnel de l'ensemble des équipements dans l'eau ;
- La localisation des stations d'acquisition DSAU après leur remontée à la surface de l'eau par l'intermédiaire de la liaison radio VHF ;
- Optionnellement, la gestion de l'interface du dispositif de contrôle de la source sismique et le contrôle des acquisitions sismiques ;
- Le téléchargement des données stockées dans un certain nombre de stations d'acquisition DSAU en parallèle et leur enregistrement sur disque dur interne ou, optionnellement, sur cartouches magnétiques ;
- La récupération des données sismiques des bouées de relais RCB par la communication réseau dans le cas où ces données issues des acquisitions auraient été stockées dans ces bouées ; et
- Le transfert des données sismiques vers le central de contrôle et d'enregistrement CCRU par l'intermédiaire d'un réseau de communication industriel de type Ethernet par exemple.

### V Description des opérations

Le déploiement du système s'opère de la manière suivante :

On procède d'abord par la préparation et la mise à l'eau des bouées relais RCB au-dessus de la formation à explorer.

Chaque station de fond DSAU est configurée, vérifiée et synchronisée sur le pont du bateau avant sa mise à l'eau.

Les stations de fond DSAU sont ensuite larguées successivement par-dessus bord et tombent par gravité jusqu'au fond de la mer. Leur positionnement est suivi à l'aide du système de test portable PTCU ou de la station centrale de contrôle et d'enregistrement CCRU. Il est nécessaire de tenir compte des courants marins qui risquent d'introduire une dérive plus ou moins importante de la trajectoire des stations vers le fond. A titre d'exemple, on suppose par exemple que la vitesse de descente d'une station DSAU est de 1 m/s et que la position qu'on veut lui assigner se trouve à 3000 m de profondeur. Pour un courant variant de l'ordre de 40 cm/s entre 0 et 1500 m et puis de 7 cm/s jusqu'à 3000 m, sans tenir compte des contre-courants, le point de chute se trouve dévié de l'ordre de 700 m par rapport au point recherché. Dans certains cas l'écart peut même atteindre plusieurs km. Généralement les courants océaniques sont plus forts en surface qu'en profondeur. Pour tenir compte de la dérive due aux courants, il peut être nécessaire de procéder au largage d'un premier DSAU, de déterminer son point de chute et puis de corriger le point de largage compte tenu de la dérive réelle.

Une fois la mise en place terminée, l'acquisition des données sismiques peut débuter. A chaque tir sismique les données sont stockées dans le module de stockage DSM (Fig.3) de chaque station de fond. La liaison acoustique bidirectionnelle entre les stations d'acquisition de fond DSAU et les bouées relais RCB, permet de transmettre des données de qualité QC significatives du bon fonctionnement des stations de fond et de la qualité des données sismiques acquises durant les sessions d'opérations sismiques.

La liaison acoustique bidirectionnelle entre les stations d'acquisition de fond DSAU et les bouées relais RCB, peut aussi permettre, si la hauteur d'eau n'est pas trop grande et le débit suffisant, de transmettre en surface une partie au moins des traces sismiques enregistrées dans les stations d'acquisition de fond.

La récupération des stations d'acquisition de fond DSAU s'effectue à la fin des tirs sismiques par activation acoustique du dispositif d'accrochage 3 (Fig.2) et libération des boîtiers d'acquisition 1 qui peuvent remonter à la surface. Les dispositifs visuels, drapeau et flashes, et l'activation de l'ensemble récepteur GPS et de l'émetteur VHF faciliteront la localisation et le ramassage des stations DSAU.

La récupération des données sismiques est réalisée par exemple avec le système de test portable PTCU qui est connecté à la station centrale de contrôle et d'enregistrement CCRU par l'intermédiaire d'une liaison d'un réseau industriel rapide de type Ethernet par exemple.

Après reconditionnement, remplacement ou recharge des batteries et du lest, les stations de fond DSAU sont de nouveau opérationnelles.

## Revendications

1. Système d'acquisition de données sismiques relatives à une formation souterraine immergée, comportant une station centrale de commande et d'acquisition (CCRU), plusieurs bouées relais (RCB) adaptées à flotter à la surface de l'eau et comprenant chacune un module de contrôle (CPU), un récepteur (Rx) de signaux de positionnement par satellite de type GPS par exemple, et des moyens de transmission radio (VHF) pour échanger des données avec la station centrale de commande et d'acquisition (CCRU), une pluralité de stations d'acquisition sismique de fond (DSAU) comprenant chacune un corps étanche intégrant un capteur de pression (PS) et associé à une partie profilée ou flèche pourvue d'un logement pour des récepteurs sismiques (SRU), adaptées à descendre par l'effet de la gravité jusqu'au fond de la masse d'eau et à y pénétrer de façon à coupler les récepteurs sismiques (SRU) avec la formation souterraine, chaque station d'acquisition (DSAU) comprenant un ensemble de commande (UC), et un dispositif (DAM) d'acquisition de données sismiques reçues par les récepteurs sismiques (SRU) dans la flèche et du capteur de pression (PS), **caractérisé en ce que** les bouées relais et les stations d'acquisition sismique de fond (DSAU) sont pourvues chacune d'un dispositif de transmission acoustique comprenant un transpondeur acoustique (AT), un module de positionnement acoustique (PLM) et un module de communication acoustique (ACM) pour échanger avec elles, par modem via le transpondeur (AT), soit des données de positionnement, soit des données de commande issues de la station centrale (CCRU) ou des données sismiques acquises par le dispositif d'acquisition, à transmettre à la dite station centrale (CCRU).

2. Système selon la revendication 1, **caractérisé en ce que** les stations d'acquisition sismique (DSAU) sont divisées en plusieurs groupes, chaque bouée relais étant adaptée à échanger des données de positionnement et des données de commande ou des données sismiques avec le groupe des stations d'acquisition de fond plus proches d'elle que des autres bouées relais.

3. Système selon la revendication 1 ou 2, **caractérisé en ce que** chaque station d'acquisition (DSAU) comporte des moyens de stockage (DSM) de traces d'enregistrement sismique correspondant à des signaux sismiques captés par les récepteurs sismiques de chaque station d'acquisition et des moyens dans l'unité de commande (UC) pour commander le transfert différé à une bouée relais (RCB) via son module de communication acoustique (ACM), d'au moins une partie des dites traces sismiques stockées, à une fréquence de transmission particulière.

4. Système selon la revendication 1 ou 2, **caractérisé en ce que** chaque station d'acquisition (DSAU) comporte des moyens de stockage (DSM) de traces d'enregistrement sismique correspondant à des signaux sismiques captés par les récepteurs sismiques de chaque station d'acquisition et des moyens, dans l'unité de commande (UC), pour former des données indicatives du bon fonctionnement de la dite station d'acquisition et commander le transfert suivant une fréquence de transmission particulière, des données formées à une bouée relais (RCB) via son module de communication acoustique (ACM).

5. Système selon l'une des revendications précédentes, **caractérisé en ce que** chaque station d'acquisition (DSAU) comporte des moyens de transmission optique des données sismiques enregistrées à une bouée relais (RCB) ou un véhicule.

6. Système selon l'une des revendications précédentes, **caractérisé en ce que** chaque bouée relais (RCB) comporte des moyens (PLM, VHF) coopérant avec le module de contrôle (CPU) pour acquérir et dater les signaux acoustiques relatifs au positionnement de stations d'acquisition (DSAU) et les transmettre à la station centrale (CCRU) en même temps que ses propres coordonnées reçues par le récepteur (Rx) du système de positionnement par satellite.

7. Système selon l'une des revendications précédentes, **caractérisé en ce que** chaque bouée relais (RCB) comporte des moyens (COM) pour enregistrer des données sismiques acquises provenant des stations d'acquisition (DSAU) et les transmettre à la station centrale de commande et d'enregistrement (CCRU).

8. Système selon l'une des revendications précédentes, **caractérisée en ce** chaque bouée relais comporte des moyens pour gérer la transmission du signal de déclenchement d'une source sismique dans le but de synchroniser au mieux l'acquisition des données sismiques par l'ensemble des stations de fond (DSAU).

9. Système selon l'une des revendications précédentes, **caractérisé en ce que** chaque station d'acquisition (DSAU) comporte des moyens de flottaison (4) associés au corps étanche (1) et des moyens de largage (3) pour dissocier le dit corps (1) de la flèche correspondante (2), sur commande de la station centrale (CCRU).

10. Système selon l'une des revendications précédentes, **caractérisé en ce que** chaque station d'acquisition (DSAU) comporte des moyens de couplage à un réseau de transmission industriel, permettant le transfert direct des données sismiques stockées à la station centrale.

11. Système selon l'une des revendications précédentes, **caractérisé en ce que** la station centrale (CCRU) comporte un ensemble de commande (UC) comprenant une unité centrale (CPU) associée à des moyens de mémorisation (MEM), et des éléments d'interface gérant les échanges entre l'unité centrale (CPU) et
- une interface graphique gérant les échanges avec des moyens de visualisation et d'impression (IGO, PR/PL), des moyens de mémorisation de masse (DD, CD, BM), et des moyens (FSI, NI) de communication avec les stations d'acquisition (DSAU) et des bouées relais (RCB), des ensembles (E1, E2) de communication avec les bouées relais par liaison hertzienne et de réception de signaux de positionnement par satellite, et un ensemble (E3) de contrôle et de déclenchement d'une source sismique (SS).

12. Système selon l'une des revendications précédentes, **caractérisé en ce qu'**il comporte une station portable de contrôle et de test (PTCU) pour assurer la logistique de déploiement et de récupération des stations d'acquisition et de leurs données, comprenant des moyens de localisation des stations d'acquisition (DSAU) après leur remontée en surface par l'intermédiaire d'une liaison hertzienne, des moyens de téléchargement de données stockées dans des stations d'acquisition (DSAU) et leur enregistrement, des moyens de récupération à distance de données sismiques stockées dans des bouées relais (RCB), et des moyens de transfert des données sismiques vers la station centrale de contrôle et d'enregistrement (CCRU) par l'intermédiaire d'un réseau de communication.

13. Méthode d'exploration ou de surveillance sismique d'une formation souterraine immergée, comportant :
- l'implantation au fond de la masse d'eau d'un ensemble d'unités d'acquisition de signaux sismiques comprenant une partie profilée ou flèche pourvue d'un logement pour au moins un récepteur sismique et un module d'acquisition de données sismiques reçues par chaque récepteur, chaque unité d'acquisition étant adaptée à descendre par l'effet de la gravité jusqu'au fond de la masse d'eau et à y pénétrer de façon à coupler les récepteurs sismiques avec la formation souterraine ;
- la détermination de la position de chaque unité d'acquisition implantée au fond ;
- la réalisation d'opérations sismiques avec émission d'ondes par une source sismique immergée, réception des ondes renvoyées par des discontinuités de la formation souterraine en réponse aux ondes émises dans la formation, collecte des données reçues par les récepteurs de chaque unité d'acquisition ; et
- la récupération par une station centrale (CCRU).des données sismiques acquises par chaque unité d'acquisition,
**caractérisée en ce qu'**elle comporte l'échange entre les bouées relais et les stations d'acquisition sismique de fond (DSAU) soit de données de positionnement soit des données de commande issues de la station centrale (CCRU) ou des données sismiques acquises par les dispositifs d'acquisition de fond (DSAU) à transmettre à la dite station centrale (CCRU) par le biais d'ensembles dans chacun des dits dispositifs d'acquisition de fond (DSAU) et chacune des bouées relais comprenant un transpondeur acoustique (AT), un module de positionnement acoustique (PLM) et un module de communication acoustique par modem (ACM).

14. Méthode selon la revendication précédente, **caractérisée en ce qu'**elle comporte le positionnement et la synchronisation initiale en temps de chaque station d'acquisition sismique de fond (DSAU) au moment de son mouillage, par référence à un système de positionnement par satellite, et le suivi de sa descente jusqu'au fond par combinaison de données de synchronisation en temps et de mesures de temps obtenues par télémétrie acoustique entre la station d'acquisition et les différentes bouées relais, jusqu'à stabilisation de la dite station au contact avec le fond.

15. Méthode selon l'une des revendications précédentes, **caractérisée en ce qu'**elle comporte la transmission acoustique de traces d'enregistrement sismique captées par les récepteurs sismiques de chaque station d'acquisition à la bouée relais correspondante par le biais des dits ensembles correspondants.

16. Méthode selon l'une des revendications précédentes, **caractérisée en ce qu'**elle comporte la transmission acoustique de chaque station d'acquisition à la bouée relais correspondante par le biais des dits ensembles correspondants, de données de qualité indicatives du bon fonctionnement de chaque station d'acquisition.

## Claims

1. A system intended for acquisition of seismic data relative to a subsea underground formation, comprising a central control and acquisition station (CCRU), several relay buoys (RCB) suited to float on the surface of the water and comprising each a control module (CPU), a positioning signal receiver (Rx) using GPS type satellite positioning for example, and radio transmission means (VHF) for exchanging data with central control and acquisition station (CCRU), a plurality of bottom seismic acquisition stations (DSAU) comprising each a sealed body including a pressure detector (PS) and associated with a streamlined part or boom provided with a housing for seismic receivers (SRU), suited to descend under the effect of gravity to the bottom of the water mass and to enter it so as to couple seismic receivers (SRU) with the underground formation, each acquisition station (DSAU) comprising a control unit (UC), and a device (DAM) intended for acquisition of seismic data received by seismic receivers (SRU) in the boom and by pressure detector (PS), **characterized in that** the relay buoys and bottom seismic acquisition stations (DSAU) are each provided with an acoustic transmission device including an acoustic transponder (AT), an acoustic positioning module (PLM) and an acoustic communication module (ACM) for exchanging therewith, by modem via transponder (AT), either positioning data or control data from central station (CCRU) or seismic data acquired by the acquisition device, to be transmitted to said central station (CCRU).

2. A system as claimed in claim 1, **characterized in that** seismic acquisition stations (DSAU) are divided into several groups, each relay buoy being suited to exchange positioning data and control data or seismic data with the group of acquisition stations that is closer thereto than to the other relay buoys.

3. A system as claimed in claim 1 or 2, **characterized in that** each acquisition station (DSAU) comprises storage means (DSM) for seismic record traces corresponding to seismic signals picked up by the seismic receivers of each acquisition station and means in control unit (UC) for controlling deferred transfer to a relay buoy (RCB), via its acoustic communication module (ACM), of at least part of said stored seismic traces, at a particular transmission frequency.

4. A system as claimed in claim 1 or 2, **characterized in that** each acquisition station (DSAU) comprises storage means (DSM) for seismic record traces corresponding to seismic signals picked up by the seismic receivers of each acquisition station and means, in control unit (UC), for forming data indicative of the good working order of said acquisition station and for controlling transfer, according to a particular transmission frequency, of the data formed to a relay buoy (RCB) via its acoustic communication module (ACM).

5. A system as claimed in any one of the previous claims, **characterized in that** each acquisition station (DSAU) comprises means for optical transmission of the seismic data recorded to a relay buoy (RCB) or a vehicle.

6. A system as claimed in any one of the previous claims, **characterized in that** each relay buoy (RCB) comprises means (PLM, VHF) cooperating with control module (CPU) for acquiring and dating the acoustic signals relative to the positioning of acquisition stations (DSAU) and for transmitting them to central station (CCRU) at the same time as its own coordinates received by receiver (Rx) of the satellite positioning system.

7. A system as claimed in any one of the previous claims, **characterized in that** each relay buoy (RCB) comprises means (COM) for recording acquired seismic data coming from acquisition stations (DSAU) and for transmitting them to central control and recording station (CCRU).

8. A system as claimed in any one of the previous claims, **characterized in that** each relay buoy comprises means for managing transmission of the signal intended to trigger a seismic source in order to best synchronize acquisition of the seismic data by bottom stations (DSAU).

9. A system as claimed in any one of the previous claims, **characterized in that** each acquisition station (DSAU) comprises buoyancy means (4) associated with sealed body (1) and launching means (3) for disconnecting said body (1) from the corresponding boom (2) at the command of central station (CCRU).

10. A system as claimed in any one of the previous claims, **characterized in that** each acquisition station (DSAU) comprises coupling means for coupling to an industrial transmission network, allowing direct transfer of the stored seismic data to the central station.

11. A system as claimed in any one of the previous claims, **characterized in that** central station (CCRU) comprises a control set (UC) including a central unit (CPU) associated with storage means (MEM), and interface elements that manage exchanges between central unit (CPU) and a graphics interface that manages exchanges with visual display and printing means (IGO, PR/PL), mass storage means (DD, CD, BM), and means (FSI, NI) for communication with acquisition stations (DSAU) and relay buoys (RCB), sets (E1, E2) allowing communication with the relay buoys by radio link and reception of positioning signals by satellite, and a set (E3) intended to control and trigger a seismic source (SS).

12. A system as claimed in any one of the previous claims, **characterized in that** it comprises a portable control and testing station (PTCU) ensuring deployment and recovery of the acquisition stations and of their data, including means for locating acquisition stations (DSAU) after they have returned to the surface by means of a radio link, means for downloading data stored in acquisition stations (DSAU) and for recording them, means for remote recovery of seismic data stored in relay buoys (RCB), and means for transferring the seismic data to central control and recording station (CCRU) by means of a communication network.

13. A method intended for seismic exploration or monitoring of a subsea underground formation, comprising :
- installing, at the bottom of the water mass, a series of seismic signal acquisition units comprising a streamlined part or boom provided with a housing for at least one seismic receiver and an acquisition module for the seismic data received by each receiver, each acquisition unit being suited to go down, under the effect of gravity, to the bottom of the water mass and to enter it so as to couple the seismic receivers with the underground formation,
- determining the position of each acquisition unit installed at the bottom,
- carrying out seismic operations with emission of waves by an underwater seismic source, reception of the waves reflected by discontinuities of the underground formation in response to the waves emitted in the formation, collection of the data received by the receivers of each acquisition unit, and
- recovery, by a central station (CCRU), of the seismic data acquired by each acquisition unit,
**characterized in that** it comprises exchange, between the relay buoys and bottom seismic acquisition stations (DSAU), of either positioning data or control data from central station (CCRU) or seismic data acquired by bottom acquisition devices (DSAU), to be transmitted to said central station (CCRU) by means of sets in each of said bottom acquisition devices (DSAU) and each relay buoy comprising an acoustic transponder (AT), an acoustic positioning module (PLM) and an acoustic communication module (ACM) using a modem.

14. A method as claimed in the previous claim, **characterized in that** it comprises positioning and initial time synchronization of each bottom seismic acquisition station (DSAU) as it is put into water, by reference to a satellite positioning system, and monitoring of its descent down to the bottom by combination of time synchronization data and of time measurements obtained by acoustic telemetry between the acquisition station and the various relay buoys, until stabilization of said station in contact with the bottom.

15. A method as claimed in any one of the previous claims, **characterized in that** it comprises acoustic transmission of seismic record traces picked up by the seismic receivers of each acquisition station to the corresponding relay buoy by means of said corresponding sets.

16. A method as claimed in any one of the previous claims, **characterized in that** it comprises acoustic transmission from each acquisition station to the corresponding relay buoy, by means of said corresponding sets, of quality data indicative of the good working order of each acquisition station.

## Patentansprüche

1. System zur Erfassung von seismischen Daten in Bezug auf eine unterirdische unterseeische Formation, umfassend eine zentrale Steuerungs- und Erfassungsstation (CCRU) mehrere Relaisbojen (RCB), die geeignet sind, an der Wasseroberfläche zu schwimmen und jede ein Steuermodul (CPU), einen Empfänger (Rx) für Satelliten-Positionierungssignale zum Beispiel vom GPS-Typ, und Funksendemittel (VHF), um Daten mit der zentralen Steuerungs- und Erfassungsstation (CCRU) auszutauschen, eine Vielzahl von seismischen Grund-Erfassungsstationen (DSAU), die jede einen dichten Körper mit einem integrierten Drucksensor (PS) umfassen und mit einem Profilteil oder Pfeil verbunden sind, der mit einer Aufnahme für seismische Empfänger (SRU) versehen ist, geeignet, durch Schwerkraftwirkung bis auf den Grund der Wassermasse abzusinken und so darin einzudringen, dass die seismischen Empfänger (SRU) mit der unterirdischen Formation gekoppelt werden, wobei jede Erfassungsstation (DSAU) eine Steuereinheit (UC) und eine Einrichtung (DAM) zur Erfassung von seismischen Daten umfasst, die von den seismischen Empfängern (SRU) im Pfeil und vom Drucksensor (PS) empfangen werden, **dadurch gekennzeichnet, dass** die Relaisbojen und die seismischen Grund-Erfassungsstationen (DSAU) jede mit einer akustischen Übertragungseinrichtung versehen sind, umfassend einen akustischen Transponder (AT), ein akustisches Positionierungsmodul (PLM) und ein akustisches Kommunikationsmodul (ACM), um untereinander per Modem über den Transponder (AT) Positionierungsdaten, Steuerdaten von der zentralen Station (CCRU) oder seismische Daten auszutauschen, die von der Erfassungsvorrichtung erfasst wurden und an die zentrale Station (CCRU) zu übertragen sind.

2. System nach Anspruch 1, **dadurch gekennzeichnet, dass** die seismischen Erfassungsstationen (DSAU) in mehrere Gruppen aufgeteilt sind, wobei jede Relaisboje geeignet ist, Positionierungsdaten und Steuerdaten oder seismische Daten mit der Gruppe von Grund-Erfassungsstationen auszutauschen, die näher an ihr als an den anderen Relaisbojen liegen.

3. System nach Anspruch 1 oder 2, **dadurch gekennzeichnet, dass** jede Erfassungsstation (DSAU) Mittel zum Speichern (DSM) von seismischen Aufzeichnungen umfasst, die seismischen Signalen entsprechen, die von den seismischen Empfängern jeder Erfassungsstation aufgefangen werden, und Mittel in der Steuereinheit (UC), um über ihr akustisches Kommunikationsmodul (ACM) mit einer bestimmten Übertragungshäufigkeit die zeitversetzte Übertragung mindestens eines Teils dieser gespeicherten seismischen Aufzeichnungen an eine Relaisboje (RCB) zu steuern.

4. System nach Anspruch 1 oder 2, **dadurch gekennzeichnet, dass** jede Erfassungsstation (DSAU) Mittel zum Speichern (DSM) von seismischen Aufzeichnungen umfasst, die seismischen Signalen entsprechen, die von den seismischen Empfängern jeder Erfassungsstation aufgefangen werden, und Mittel in der Steuereinheit (UC), um Daten zu formen, die die ordnungsgemäße Funktion dieser Erfassungsstation anzeigen, und um über ihr akustisches Kommunikationsmodul (ACM) die Übertragung der geformten Daten an eine Relaisboje (RCB) mit einer bestimmten Übertragungshäufigkeit zu steuern.

5. System nach einem der vorherigen Ansprüche, **dadurch gekennzeichnet, dass** jede Erfassungsstation (DSAU) Mittel zur optischen Übertragung der aufgezeichneten seismischen Daten an eine Relaisboje (RCB) oder an ein Fahrzeug umfasst.

6. System nach einem der vorherigen Ansprüche, **dadurch gekennzeichnet, dass** jede Relaisboje (RCB) Mittel (PLM, VHF) umfasst, die mit dem Steuermodul (CPU) zusammenwirken, um die akustischen Signale bezüglich der Position der Erfassungsstationen (DSAU) zu erfassen und zu datieren und sie gleichzeitig mit ihren eigenen Koordinaten, die vom Empfänger (RX) des satellitengestützten Ortungssystems empfangen wurden, an die zentrale Station (CCRU) zu übertragen.

7. System nach einem der vorherigen Ansprüche, **dadurch gekennzeichnet, dass** jede Relaisboje (RCB) Mittel (COM) umfasst, um erfasste seismische Daten, die von den Erfassungsstationen (DSAU) kommen, zu speichern und sie an die zentrale Steuerungs- und Aufzeichnungsstation (CCRU) zu übertragen.

8. System nach einem der vorherigen Ansprüche, **dadurch gekennzeichnet, dass** jede Relaisboje (RCB) Mittel umfasst, um die Übertragung des Auslösesignals einer seismischen Quelle zu verwalten, mit dem Ziel, die Erfassung der seismischen Daten durch die Gruppe der Grund-Stationen (DSAU) möglichst gut zu synchronisieren.

9. System nach einem der vorherigen Ansprüche, **dadurch gekennzeichnet, dass** jede Erfassungsstation (DSAU) Schwimmmittel (4) umfasst, die mit dem dichten Körper (1) verbunden sind, und Abtrennmittel (3), um den Körper (1) auf Befehl der zentralen Station (CCRU) hin vom entsprechenden Pfeil (2) zu trennen.

10. System nach einem der vorherigen Ansprüche, **dadurch gekennzeichnet, dass** jede Erfassungsstation (DSAU) Mittel zur Kopplung an ein industrielles Übertragungsnetz umfasst, das die direkte Übertragung der gespeicherten seismischen Daten zur zentralen Station erlaubt.

11. System nach einem der vorherigen Ansprüche, **dadurch gekennzeichnet, dass** die zentrale Station (CCRU) eine Steuereinheit (UC) umfasst, umfassend eine Zentraleinheit (CPU), die mit Speichermitteln (MEM) verbunden ist, und Schnittstellenelemente zur Verwaltung der Austausche zwischen der Zentraleinheit (CPU) und
- einer Graphik-Schnittstelle zur Verwaltung der Austausche mit Anzeige- und Druckmitteln (IGO, PR/PL), Massenspeichermitteln (DD, CD, BM) und Mitteln (FSI, NI) zur Kommunikation mit den Erfassungsstationen (DSAU) und den Relaisbojen (RSB), Einheiten (E1, E2) zur Kommunikation mit den Relaisbojen durch Richtfunkverbindung und zum Empfang der Satelliten-Positionierungssignale, und einer Einheit (E3) zur Steuerung und Auslösung einer seismischen Quelle (SS).

12. System nach einem der vorherigen Ansprüche, **dadurch gekennzeichnet, dass** es eine tragbare Steuer- und Teststation (PTCU) umfasst, um die Stationierungs- und Bergungslogistik der Erfassungsstationen und ihrer Daten zu gewährleisten, umfassend Mittel zur Ortung der Erfassungsstationen (DSAU) nach ihrem Wiederaufstieg an die Wasseroberfläche durch Richtfunkverbindung, Mittel zum Herunterladen der in den Erfassungsstationen (DSAU) gespeicherten Daten und zu deren Speicherung, Mittel zur Fernwiedergewinnung von seismischen Daten, die in Relaisbojen gespeichert sind, und.Mittel zur Übertragung der seismischen Daten zur zentralen Steuerungs- und Aufzeichnungseinheit (CCRU) über ein Kommunikationsnetz.

13. Verfahren zur seismischen Erkundung oder Überwachung einer unterirdischen unterseeischen Formation, umfassend:
- das Einpflanzen, in den Grund der Wassermasse, einer Gruppe von Erfassungseinheiten für seismische Signale, umfassend ein Profilteil oder einen Pfeil, der mit einer Aufnahme für mindestens einen seismischen Empfänger versehen ist, und eine Einrichtung zur Erfassung der seismischen Daten, die von jedem Empfänger empfangen werden, wobei jede Erfassungseinheit geeignet ist, durch Schwerkraftwirkung bis auf den Grund der Wassermasse abzusinken und so darin einzudringen, dass die seismischen Empfänger mit der unterirdischen Formation gekoppelt werden;
- das Bestimmen der Position jeder in den Grund eingepflanzten Erfassungseinheit;
- das Durchführen von seismischen Operationen mit Abstrahlung von Wellen durch eine eingetauchte seismische Quelle, das Empfangen der Wellen, die in Antwort auf die in die Formation abgestrahlten Wellen von den Diskontinuitäten der unterirdischen Formation zurückgeworfen werden, das Sammeln der Daten, die von den Empfängern jeder Erfassungseinheit empfangen werden; und
- das Rückgewinnen, durch eine zentrale Station (CCRU), der seismischen Daten, die von jeder Erfassungseinheit erfasst wurden,
**dadurch gekennzeichnet, dass** es den Austausch, zwischen den Relaisbojen und den seismischen Grund-Erfassungsstationen (DSAU), von Positionierungsdaten, von Steuerdaten, die von der zentralen Station (CCRU) kommen, oder von seismischen Daten umfasst, die von den seismischen Grund-Erfassungsstationen (DSAU) erfasst wurden und an die zentrale Einheit (CCRU) zu übertragen sind, durch Einheiten in jeder dieser seismischen Grund-Erfassungsstationen (DSAU) und jeder der Relaisbojen, umfassend einen akustischen Transponder (AT), ein akustisches Positionierungsmodul (PLM) und ein akustisches Kommunikationsmodul mit Modem (ACM).

14. Verfahren nach dem vorherigen Anspruch, **dadurch gekennzeichnet, dass** es die Positionierung und die zeitliche Anfangssynchronisation, durch Bezugnahme auf ein Satellitenortungssystem, jeder seismischen Grund-Erfassungsstation (DSAU) im Moment ihres Aussetzens umfasst, und das Verfolgen ihres Absinkens bis auf den Grund durch Kombination der zeitlichen Synchronisationsdaten und der Zeitmessungen, die bis zur Stabilisierung dieser Station beim Kontakt mit dem Grund durch akustische Entfernungsmessung zwischen der Erfassungsstation und den verschiedenen Relaisbojen erhalten werden.

15. Verfahren nach einem der vorherigen Ansprüche, **dadurch gekennzeichnet, dass** es das akustische Übertragen von seismischen Aufzeichnungen, die von den seismischen Empfängern jeder Erfassungsstation aufgefangen werden, zur entsprechenden Relaisboje mithilfe der entsprechenden Einheiten umfasst.

16. Verfahren nach einem der vorherigen Ansprüche, **dadurch gekennzeichnet, dass** es das akustische Übertragen, von jeder Erfassungsstation zur entsprechenden Relaisboje, von Qualitätsdaten, die die ordnungsgemäße Funktion jeder Erfassungsstation anzeigen, mithilfe der entsprechenden Einheiten umfasst.
